Europäisches Patentamt

European Patent Office

Office européen des brevets

(19)

(11) Publication number: **0 434 421 B1**

## (12) EUROPEAN PATENT SPECIFICATION

(45) Date of publication of patent specification: **07.09.94** (51) Int. Cl.5: **C04B 35/66, B22D 41/02**

(21) Application number: **90314000.2**

(22) Date of filing: **20.12.90**

(54) **Protective layer for linings in metallurgical furnaces and the like.**

(30) Priority: **22.12.89 NO 895249**

(43) Date of publication of application:
**26.06.91 Bulletin 91/26**

(45) Publication of the grant of the patent:
**07.09.94 Bulletin 94/36**

(84) Designated Contracting States:
**AT BE CH DE DK ES FR GB GR IT LI LU NL SE**

(56) References cited:
**EP-A- 0 064 863**
**EP-A- 0 144 303**
**EP-A- 0 213 900**
**EP-A- 0 425 086**
**FR-A- 2 365 768**

**WORLD PATENTS INDEX LATEST Derwent
Publications Ltd.,London, GB; AN 88-230415
& JP-A-63 162 579 (SHINAGAWA FIREBRICK)
26 December 1986**

(73) Proprietor: **ICELANDIC ALLOYS LTD.**
**301 Akranes**
**Grundartangi, Skilmannahreppur (IS)**

(72) Inventor: **Steindal, Leif**
**Vesturgata 156**
**300 Akranes (IS)**

(74) Representative: **Rees, David Christopher et al**
**Kilburn & Strode**
**30 John Street**
**London WC1N 2DD (GB)**

## Description

The present invention relates to a refractory layer for protecting the lining materials in metallurgical furnaces, metallurgical tapping and casting ladles, launders, runners and tapping spouts.

The lining in furnaces, ladles, runners and tapping spouts used for molten metals such as ferroalloys and steel and for mineral melts are normally protected against the melt by applying a layer of refractory material on the linings. For tapping and casting ladles, this layer is normally 3-5 cm thick on the walls and about 10 cm thick in the bottom of the ladle, and is applied in the form of a slurry. When the ladles are in use, a layer of solid metal and slag slowly accumulates on the inside of the ladle. The capacity of the ladles is thereby slowly reduced and finally the ladles have to be cleaned. The solid layer of accumulated metal and slag is normally removed by means of a hydraulic hammer. During this cleaning process the lining is sometimes damaged. The lining therefore has to be repaired or even totally renewed prior to the application of a new protective layer of refractory material.

The reason for the damage of the ladle lining can be twofold. Firstly, the protective layer may fail in use, allowing metal and slag to adhere directly to the lining. Consequently large parts of the lining may break off during the cleaning process. Secondly, the protective refractory layer may itself stick quite strongly to the lining, making the separation of the two difficult by means of the hydraulic hammer.

Those frequent instances of damage to the lining of the ladles leads to high maintenance costs for ladies as the lining has to be repaired and renewed frequently. The same is true for launders, runners and tapping spouts.

JP-A-63 162579 discloses a conventional material, including, for example, alumina in agregate form together with a refractory material in the form of a fine powder. EP-A-144303 describes a coating composition comprising carbon and silicon in addition to a refractory agregate.

It is an object of the present invention to provide a new composition of a refractory protection layer for linings in furnaces, ladles, launders, runners and tapping spouts intended to be in contact with molten metals, such as ferroalloys and steel, which refractory layer is very resistant against attack from molten metal or mineral melts, but is easy to separate from the lining material. The refractory protection layer should also be capable of direct application on the steel walls of furnaces and ladles.

Accordingly, the present invention provides a refractory coating 5 composition for protecting linings 4 in furnaces, ladles or launders, runners and tapping spouts for molten metals and mineral melts, characterised in that the coating 5 includes a carbon source and a silicon source and which, when coming into contact with molten metal or mineral melts at a temperature above 1450°C, undergoes a metamorphosis making the surface 12 of the coating facing the molten metal or mineral melt hard and durable against high temperature, while the side 11 of the coating facing the lining 4 becomes brittle.

According to a preferred embodiment, the refractory coating composition contains in percent by weight, 50-90% of a filler material having a particle size between 0 and 10 mm, 5-30% of a silicon source with a particle size up to 1 mm, 3-10% carbonaceous material having a particle size up to 1 mm or a liquid carbon source, 1 to 15% inorganic or organic binder and 0-5% microsilica.

As inert filler material, refractory materials such as quartzite, olivine, aluminium oxide, silicon carbide, magnesite and chamotte can be used.

As a silicon source, ferrosilicon, silicon and siliconmanganese can be used. The inorganic or organic binder used in the refractory coating composition should give a sufficient binding effect at a relatively low temperature, in order to give sufficient strength to the refractory coating composition before it comes into contact with molten metal. Cement-based binders such as aluminate cement and portland cement are examples of inorganic binders which can be used. As organic binders, resin-based binders and tar-rich binders can be used. It is particularly preferred to use aluminate cement as a binder.

The microsilica which is used in the refractory coating composition according to the present invention consists of extremely small spherical amorphous particles containing at least 85% by weight of $SiO_2$. The specific area is between 15 and 30 $m^2/g$ and the particles have a diameter between 0.1 and 0.2 $\mu$m. Microsilica is obtained from off-gases from electric reduction furnaces for production of silicon or ferrosilicon, but can also be produced by reduction of $SiO_2$ to SiO-gas and reoxidation of SiO in air.

Curing accelerators for the low temperature binder and plasticisers may be added to the refractory coating composition if necessary.

Preferably the refractory coating composition contains in percent by weight 55 to 75% quartzite or olivine having a particle size up to 6 mm, 10-25% ferrosilicon or silicon having a particle size up to 0.5 mm, 5-10% carbon having a particle size up to 0.5 mm, 2-8% aluminate cement, 0-1.5% portland cement as a curing accelerator, 2-6% microsilica and 0.2-0.5% bentonite or ball clay as plasticiser.

2

The refractory coating composition according to the present invention can be applied in the form of a slurry of the components and water and is gunned or trowelled on the lining to be protected. For ladles the thickness of the coating layer is preferably 3 to 5 cm for the walls and 10 to 15 cm for the bottom of the ladle. When cement binder is used, the coating cures at room temperature, and, as ladles on which a coating has been applied are pre-heated before being put into use, any remaining water in the cured coating is removed before tapping of metals into the ladle. When an organic resin type binder is used the coating has to be heated to the curing temperature for the binder in order to obtain the necessary strength.

When the refractory coatings are applied on the lining in ladles where the lining is still relatively hot, resin binders may advantageously be used instead of cement binders as the resin binders, as mentioned above, normally need a temperature above room temperature in order to cure and give a satisfactory strength to the refractory coating composition before the composition comes into contact with molten metal.

When ladles having the refractory coating according to the present invention are filled with metal, the part of the coating nearest to the metal is heated to approximately the metal temperature, which for ferro alloys and steel is generally above 1500°C. At this temperature the carbon and the silicon-containing particles in the coating will react and form a very strong matrix, having embedded therein particles of the inert filler material. This structure is very resistant to ferroalloys and steel and ensures that the molten metal and alloy will not penetrate into the coating and attack the lining.

The temperature in the refractory coating will, due to heat losses, decrease from the boundary between the metal in the ladle and the coating, outwardly through the coating layer. Thus the temperature at the boundary between the lining and the coating layer will be substantially lower than the temperature at the boundary between the metal and the coating layer. At the lower temperature at the boundary between the lining and the refractory coating, reaction between carbon and silicon will not take place and the layer of refractory coating nearest to the lining will therefore remain brittle. Furthermore, volatiles developed from the carbon material will be trapped and make the material more porous in the inner layer whereas they escape through the bath from the outer layer. A refractory coating layer is thereby obtained which is very strong and dense nearest to the metal and brittle nearest to the carbon lining. The structure of the refractory coating will remain as stated above irrespective of the number of tappings in the ladle.

When the ladle has to be cleaned due to buildup of sculls, the coating layer is easily removed when it is chiseled by for example a hydraulic hammer near the interface between the lining and the coating. Only a light mechanical impact will break the coating layer away from the lining. In this way the refractory coating and the sculls can be removed very effectively and without damaging the lining. As soon as the refractory coating and the sculls are removed a new layer of refractory coating can be applied without the necessity of repairing the lining.

It has further been found that for ladles in which the refractory composition coating according to the present invention is used, the accumulation or build-up of sculls will be reduced due to the improved insulation properties of the more porous part of the protective layer.

The invention may be carried into practice in various ways and some embodiments will now be described with reference to the accompanying drawings and Examples. In the drawings:-

Figure 1 is a vertical section through a ladle for ferrosilicon equipped with a carbon lining;

Figure 2 is a diagram showing the temperature gradient through the ladle of Figure 1; and

Figure 3 is a vertical section through a ladle for ferrosilicon showing the refractory coating layer after metamorphosis.

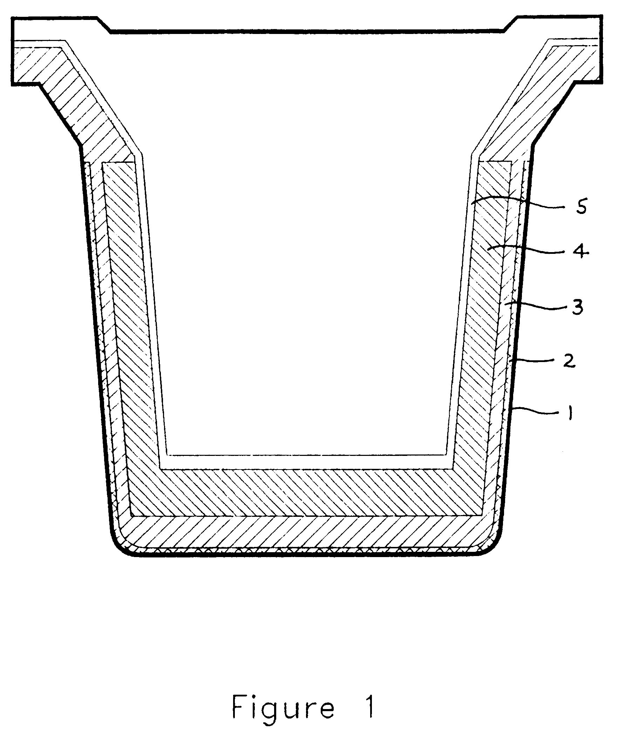

In Figure 1 there is shown a ladle for ferrosilicon comprising an outer shell 1. On the inside the steel shell is provided with a 6 mm cloth of insulating material 2, and a castable refractory layer 3. On the refractory layer 3 there is arranged carbon lining 4 with a thickness of about 250 mm. On the inside of the carbon lining there is placed a refractory coating layer 5 according to the present invention with a thickness of about 40 mm at the walls and 100 mm in the bottom.

EXAMPLE 1

A refractory coating composition according to the present invention consisting of the following components was made:

| | | |
|---|---|---|
| Quartzite 0-6 mm | 69.7 | % by weight |
| Ferrosilicon - 0.5 mm | 15.2 | % by weight |
| Carbon - 0.5 mm | 7.6 | % by weight |
| Aluminate cement | 3.0 | % by weight |
| Microsilica | 4.2 | % by weight |
| Bentonite | 0.3 | % by weight |

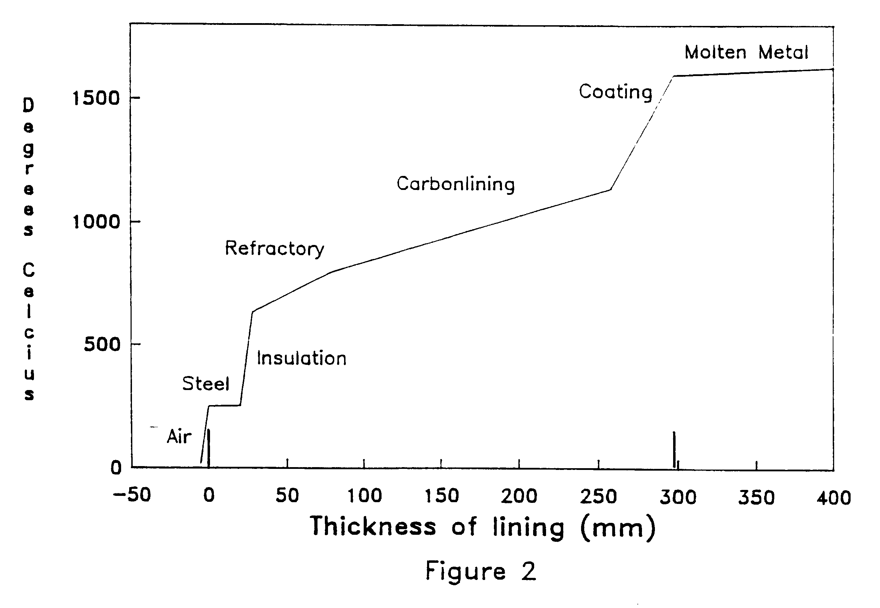

The components were mixed with water to a slurry and applied on the carbon lining by trowelling. The coating was allowed to cure whereafter the coating was heated by an oil burner. The ladle with the refractory coating was used for tapping of ferrosilicon, and the temperature profile through the lining of the ladle containing metal was established. The temperature profile is shown in Figure 2.

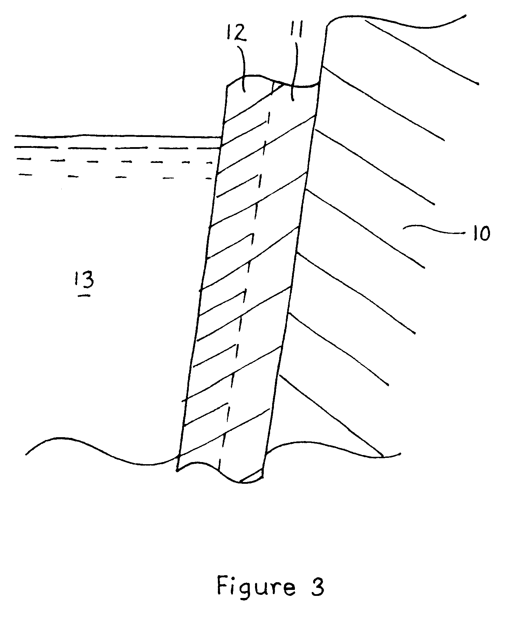

As can be seen from Figure 2 the temperature in the refractory coating layer drops from about 1600°C at the boundary between metal and the coating to about 1130°C at the boundary between the carbon lining and the coating. In the part of the coating which reached a temperature of above 1450°C, and was subjected to the pressure applied by the molten ferrosilicon, the carbon and the silicon reacted to form a dense and hard matrix which is very resistant against molten ferrosilicon. The part of the coating nearest to the carbon lining maintained a brittle structure as the carbon and silicon particles did not react at these lower temperatures. The characteristics of the reacted refractory coating are shown in Figure 3. In Figure 3 the carbon lining is shown by reference numeral 10. Facing the carbon lining 10 is a first part of the refractory coating 11, which has a very brittle structure. Nearest to the metal 13 a second part of the refractory coating 12 consisting of a hard and dense matrix is formed.

When sculls had accumulated in the ladle, the ladle was taken out for removing the sculls and the refractory coating. The coating and the sculls were easily removed by light impact on the refractory coating and no damage was found on the carbon lining.

Experience has shown that the lifetime of the ladle carbon lining coated with the protection layer according to the present invention has been increased by a factor of about 3 compared to the lifetime of carbon linings protected by coating materials previously used. Thus the lining costs are dramatically reduced by using the refractory coating composition according to the present invention.

EXAMPLE 2

There was made a refractory coating composition consisting of the following components:

| | | |
|---|---|---|
| Quartzite 0-6 mm | 61.3 | % by weight |
| Ferrosilicon 0.5 mm | 20.6 | % by weight |
| Carbon 0.5 mm | 7.6 | % by weight |
| Aluminate cement | 6.5 | % by weight |
| Portland cement | 1.2 | % by weight |
| Microsilica | 2.5 | % by weight |
| Bentonite | 0.3 | % by weight |

The components were mixed with water to a slurry and applied on the carbon lining of a ladle for ferrosilicon by trowelling. The coating was allowed to cure whereafter the coating was heated by a oil burner. The ladle with the refractory coating was ued for tapping easily removed by light impact by an hydraulic hammer. The refractory coating showed the same structure as in Figure 3, with a brittle part facing the carbon lining and a hard dense structure facing the metal.

4

EXAMPLE 3

A refractory coating composition according to the present invention having the following composition in % by weight was made:

| | |
|---|---|
| Olivine 0-6 mm | 65.0 % |
| Silicon - 1mm | 12.6 % |
| Carbon - 0.5mm | 8.0 % |
| Aluminate cement | 4.1 % |
| Portland cement | 1.0 % |
| Microsilica | 5.2 % |
| Ball clay | 4.1 % |

The ingredients were mixed throughly and water added to correct consistency. The mixed refractory composition was gunned on the lining of a ladle for silicomanganese. The ladle was lined with refractory bricks on the walls and in the bottom and with a refractory castable on the rim. The mixed refractory composition was gunned on the lining immediately after the hot ladle had been cleaned for sculls. The heat of the ladle was sufficient to start the hydraulic binding of coating material and to dry the applied coating. The ladle was put into operation very shortly after the preparation. The refractory coting according to the present invention gave a very good protection of the ladle lining and increased its lifetime considerably.

EXAMPLE 4

This example describes a refractory coating composition with an organic resin-type binder. A refractory coating composition comprising the following components in % by weight was made.

| | |
|---|---|
| Quartzite 0-6mm | 65.3 % |
| Ferrosilicon - 0.5mm | 15.3 % |
| Carbon - 0.5mm | 6.9 % |
| Liquid phenol of the resole type | 2.5 % |
| Phenol powder resin | 0.5 % |
| Microsilica | 5.2 % |
| Bentonite | 0.6 % |
| Water | 4.8 % |

The components were mixed and the mixture was stored in plastic bags for four weeks prior to use. Then the material was used for coating the lining of a ferrosilicon ladle. It was put into the bottom of a cold ladle and compacted with a hyraulic hammer. In a similar way it was used at the walls. After heating up the ladle by a ladle heater, to a temperature above the curing temperatures for the binder, the ladle was taken into use. The coating worked successfully with results as described in the previous examples.

EXAMPLE 5

This examples describes a refractory coating composition according to the present invention applied directly on oil cooled steel panels which constituted the walls of an electric arc furnace used for melting mineral wool. The refractory coating composition consisted of the following ingredients in % by weight:

5

| | |
|---|---|
| Olivine 0-6mm | 68.7 % |
| Ferrosilicon - 0.5mm | 14.3 % |
| Carbon - 0.5mm | 7.9 % |
| Resin-binder | 3.0 % |
| Microsilica | 5.2 % |
| Bentonite | 0.9 % |

The ingredients were mixed thoroughly and water added to correct inconsistency. Then the mixture was filled into a steel form attached to the steel panels and compacted with a vibrator. In operation the coating withstood the melted mineral bath and increased the energy efficiency of the furnace due to the insulating effect of the coating.

EXAMPLE 6

This examples describes the use of the refractory coating composition according to the present invention for protecting the lining of a small induction furnace for melting iron scrap. The refractory coating composition consisted of the following components in % by weight.

| | |
|---|---|
| Quartzsand 0-2mm | 65.3 % |
| Ferrosilicon - 0.5mm | 15.8 % |
| Carbon - 0.5mm | 8.4 % |
| Aluminate cement | 5.0 % |
| Microsilica | 5.2 % |
| Bentonite | 0.3 % |

The ingredients were mixed by water addition to a thick slurry. Then the slurry was trowelled on the refractory lining of the furnace up to a layer five centimetres thick. This protection of the refractory lining increased its lifetime from 12 to 14 months.

The same mixture was used on a runner and in a ladle for molten cast iron. There the coating resulted in a similarly improved protection.

EXAMPLE 7

This example describes a refractory coating composition with an inorganic, phosphate based binder. A refractory coating composition comprising the following components in % by weight was made.

| | |
|---|---|
| Olivine 0-6mm | 69.7 % |
| Ferrosilicon - 0.5mm | 14.4 % |
| Carbon - 0.5mm | 7.4 % |
| Phosphate based binder | 3.0 % |
| Microsilica | 4.0 % |
| Bentonite | 1.5 % |

The components were mixed and the mixture stored in plastic bags for several weeks prior to use. Then the material was used with the addition of water as a gunning material for coating a hot ferrosilicon ladle that was gunned directly after cleaning.

The latent heat in the ladle cured the binder thus making the ladle ready for use after approximately 2 hours.

## Claims

1. A refractory coating 5 composition for protecting linings 4 in furnaces, ladles or launders, runners and tapping spouts for molten metals and mineral melts, characterised in that the coating 5 includes a carbon source and a silicon source and which, when coming into contact with molten metal or mineral melts at a temperature above 1450°C, undergoes a metamorphosis making the surface 12 of the coating facing the molten metal or mineral melt hard and durable against high temperature, while the side 11 of the coating facing the lining 4 becomes brittle.

2. A composition as claimed in Claim 1, characterised in that the coating composition contains in percent by weight, 50-90% of an inert filler material having a particle size up to 10mm, 5-30% of a silicon source with a particle size up to 1mm, 3-10% carbonaceous material having a particle size up to 1mm or a liquid carbon source, 1-15% inorganic or organic binder and optionally up to 5% microsilica.

3. A composition as claimed in Claim 2, characterised in that the inert filler material comprises quartzite, olivine, aluminium oxide, silicon carbide, magnesite and/or chamotte.

4. A composition as claimed in Claim 2 or Claim 3, characterised in that the silicon source is ferrosilicon, silicon or siliconmanganese.

5. A composition as claimed in any of Claims 2 to 4, characterised in that the coating composition contains in percent by weight 55-75% quartzite or olivine having a particle size up to 6mm, 10-25% ferrosilicon or silicon having a particle size up to 0.5mm, 5-10% carbon having a particle size up to 0.5mm, 2-8% aluminate cement, 2-6% microsilica, 0.2 to 0.5% bentonite orball clay as a plasticizer and optionally up to 1.5% portland cement as a curing accelerator.

6. A composition as claimed in any of Claims 2 to 4, characterised in that the organic binder is a phenolic resin.

7. A composition as claimed in any of Claims 2 to 4, characterised in that the inorganic binder is a phosphate based agent.

## Patentansprüche

1. Materialzusammensetzung für eine feuerfeste Beschichtung (5) zum Schutz von Auskleidungen (4) in Öfen, Gießpfannen oder Gießrinnen, Ausgußrinnen und Abstichrinnen für geschmolzene Metalle und Mineralschmelzen, dadurch gekennzeichnet, daß die Beschichtung (5) eine Kohlenstoffquelle und eine Siliciumquelle enthält und, wenn sie oberhalb einer Temperatur von 1450 °C mit dem geschmolzenen Metall oder den Mineralschmelzen in Berührung kommt, einer Umwandlung unterworfen wird in der Weise, daß die an dem geschmolzenen Metall oder der Mineralschmelze angrenzende Oberfläche (12) der Beschichtung hart und gegen hohe Temperatur beständig wird, während die an der Auskleidung (4) angrenzende Seite (11) der Beschichtung spröde wird.

2. Materialzusammensetzung nach Anspruch 1, dadurch gekennzeichnet, daß die Beschichtungszusammensetzung 50-90 Gew.% eines inerten Füllstoffmaterials einer Teilchengröße bis zu 10 mm, 5-30 Gew.% einer Siliciumquelle einer Teilchengröße bis zu 1 mm, 3-10 Gew.% eines kohlenstoffhaltigen Materials einer Teilchengröße bis zu 1 mm oder einer flüssigen Kohlenstoffquelle, 1-15 Gew.% eines anorganischen oder organischen Binders und wahlweise bis zu 5 Gew.% Mikrosiliciumdioxid enthält.

3. Materialzusammensetzung nach Anspruch 2, dadurch gekennzeichnet, daß das inerte Füllstoffmaterial Quarzit, Olivin, Aluminiumoxid, Siliciumcarbid, Magnesit und/oder Chamotte enthält.

4. Materialzusammensetzung nach Anspruch 2 oder 3, gekennzeichnet durch Ferrosilicium, Silicium oder Siliciummangan als Siliciumquelle.

7

5. Materialzusammensetzung nach einem der Ansprüche 2 bis 4, dadurch gekennzeichnet, daß die Beschichtungszusammensetzung 55-75 Gew.% Quarzit oder Olivin einer Teilchengröße bis zu 6 mm, 10-25 Gew.% Ferrosilicium oder Silicium einer Teilchengröße bis zu 0,5 mm, 5-10 Gew.% Kohlenstoff einer Teilchengröße bis zu 0,5 mm, 2-8 Gew.% Aluminatzement, 2-6 Gew.% Mikrosiliciumdioxid, 0,2 bis 0,5 Gew.% Bentonit oder Töpferton als Weichmacher und wahlweise bis zu 1,5 Gew.% Portland-Zement als Aushärtungsbeschleuniger enthält.

6. Materialzusammensetzung nach einem der Ansprüche 2 bis 4, gekennzeichnet durch Phenolharz als organischen Binder.

7. Materialzusammensetzung nach einem der Ansprüche 2 bis 4, dadurch gekennzeichnet, daß der anorganische Binder ein Agens auf Phosphatbasis ist.

**Revendications**

1. Composition d'enduit réfractaire (5) pour la protection de revêtements (4) de fours, poches ou canaux, rigoles et chenaux de coulée pour métaux fondus et refontes de minerai, caractérisée en ce que l'enduit (5) comprend une source de carbone et une source de silicium et qui, lorsqu'il entre en contact avec un métal fondu ou une refonte de minerai à une température supérieure à 1450°C, subit une métamorphose, rendant la surface (12) de l'enduit, face au métal fondu ou à la refonte de minerai, dure et durable par rapport à des températures élevées, alors que le côté (11) de l'enduit face au revêtement (4) devient fragile.

2. Composition suivant la revendication 1, caractérisée en ce que la composition d'enduit contient, en pourcentage en poids, 50 à 90% d'une charge inerte ayant une granulométrie de jusqu'à 10 mm, 5 à 30% d'une source de silicium avec une granulométrie de jusqu'à 1 mm, 3 à 10% d'une matière carbonée ayant une granulométrie de jusqu'à 1 mm ou d'une source liquide de carbone, 1 à 15% d'un liant inorganique ou organique et, facultativement, jusqu'à 5% de microsilice.

3. Composition suivant la revendication 2, caractérisée en ce que la charge inerte comprend du quartzite, de l'olivine, de l'oxyde d'aluminium, du carbure de silicium, de la magnésite et/ou de la chamotte.

4. Composition suivant la revendication 2 ou 3, caractérisée en ce que la source de silicium est du ferrosilicium, du silicium ou du silicomanganèse.

5. Composition suivant l'une quelconque des revendications 2 à 4, caractérisée en ce que la composition d'enduit contient, en pourcentage en poids, 55 à 75% de quartzite ou d'olivine ayant une granulométrie de jusqu'à 6 mm, 10 à 25% de ferrosilicium ou de silicium ayant une granulométrie de jusqu'à 0,5 mm, 5 à 10% de carbone ayant une granulométrie de jusqu'à 0,5 mm, 2 à 8% de ciment d'aluminate, 2 à 6% de microsilice, 0,2 à 0,5% d'argile bentonite orball comme agent plastifiant et, facultativement, jusqu'à 1,5% de ciment Portland comme accélérateur de réticulation.

6. Composition suivant l'une quelconque des revendications 2 à 4, caractérisée en ce que le liant organique est une résine phénolique.

7. Composition suivant l'une quelconque des revendications 2 à 4, caractérisée en ce que le liant inorganique est un agent à base de phosphate.

Figure 1

Figure 2

Figure 3